# EUROPEAN PATENT SPECIFICATION

(11) **EP 0 790 171 B1**
(45) Date of publication and mention of the grant of the patent: **21.11.2001**
(21) Application number: 97300901.2
(22) Date of filing: 12.02.1997
(51) Int. Cl.: B62D 43/00

(54) **Security device for the spare wheel of a vehicle**
Sicherheitsvorrichtung für einen Fahrzeug-Ersatzradträger
Dispositif de sécurité de la roue de secours d'un véhicule

(30) Priority: 13.02.1996 GB 9602935
(43) Date of publication of application: 20.08.1997
(73) Proprietor: Lister, Ian, London SW16 4BJ (GB)
(72) Inventor: Lister, Ian, London SW16 4BJ (GB)
(74) Representative: Pedder, James Cuthbert

(56) References cited:
- GB-A- 2 276 362
- GB-A- 2 291 385

## Description

This invention relates to a security device for the spare wheel of a vehicle.

The majority of vehicles today carry one or more spare wheels which can be used to replace a damaged road wheel or tyre so that, for example, a relatively minor incident, such as a puncture, does not cause lengthy delays; the wheel concerned can be replaced leaving the damaged wheel to be repaired by experts at a more convenient time. However, the space taken up by a wheel is relatively large and, in a number of vehicles, particularly cars, room is saved by locating the spare wheel underneath the boot or equivalent area. The wheel is retained in some sort of cage structure which can be lowered, for example by a control; situated in the boot, so as to permit access thereto whole maintaining the vehicle ground clearance when access is not required.

Unfortunately, because the spare wheel is located outside the vehicle, it has become a target for thieves. While the cage cannot readily be lowered as the controls are located out of reach in the boot, nevertheless it can be a relatively simple operation to cut through the cage and/or lowering mechanism using strong bolt cutters, thus rendering the spare wheel removable within seconds.

One proposal for overcoming this problem was made in my co-pending application GB-A-2 276 362. In this application, a security device for the spare wheel of a vehicle according to the preamble of claim 1 was proposed which comprised a base portion adapted to be seated against one side of a wheel, connector means carried by the base portion, adapted to pass through an existing aperture in the wheel and having a threaded bore therein, and an attachment bolt threadable into the threaded bore and adapted to pass through an aperture in a suitable part of the vehicle, which aperture is too small for the passage of the bolt head, thereby securing the wheel to that part of the vehicle.

While this arrangement has proved satisfactory in practice in most cases, it is expensive to produce and, in cases where the plane of the spare wheel and the associated part of the vehicle (such as the boot floor of a car) were at an angle to each other, produced an unsightly fixing in the vehicle.

The present invention seeks to provide a security device for the spare wheel of a vehicle which is an improvement on my prior proposal and which renders unauthorised access thereto much more difficult, if not impossible.

According to the invention, there is provided a security device for the spare wheel of a vehicle comprising a main body portion having a main cylindrical part adapted to pass through the central aperture of a wheel, an annular flange at one end larger than the wheel aperture so that it cannot pass therethrough and spring means extensible radially outwardly from the cylindrical part for engaging the rim of the wheel aperture to retain the main body portion in the wheel aperture, threaded means in the main body portion and bolt means adapted to pass through an aperture in a suitable part of the vehicle but having a head too large to pass therethrough, the bolt cooperating with the threaded part in the main body so as to retain the vehicle wheel against the said suitable part of the vehicle.

Preferably, the threaded means in the main body comprises a captive nut which may, if desired be a lock nut.

Suitably, the device may be applied to wheels stored under the boot floor of a vehicle but could also be applied to spare wheels secured to other parts of the vehicle.

The cylindrical part of the main body may be hollow and be provided with the cross members between which the captive nut is held. The cross members may be provided wit ribs or other protrusions, the nut being pushed past these ribs or protrusions and being retained thereby.

The spring means may comprise spring clips, attached to the main body portion, parts of these clips extending longitudinally of the main body portion and away therefrom.

The main body portion may be closed at one end away from the flange and may be provided with an aperture above the captive nut through which the bolt can pass.

Two apertures may be provided, one inclined to the other so that the device can be used with spare wheels which are inclined to the surface to which they are to be attached as well as parallel thereto. In this case, provision may also be made for the captive nut to be held at an angle beneath the inclined aperture.

The inclined aperture may be of elongated shape to enable the bolt to pass therethrough at an angle.

If desired, a plate may be provided to lie inside the boot floor of the vehicle so that the bolt acts on the plate instead of directly on the boot floor.

The invention will now be described in greater detail, by way of example, with reference to the drawings, in which:-
Figure 1 is a perspective view of a main body portion of a security device in accordance with the invention;
Figure 2 is a sectional view taken on the line II-II of figure 1;
Figure 3 is an underneath plan view of the main body portion of figure 1;
Figure 4 is a view of the assembled security device in accordance with the invention showing parts of a spare wheel and a part of the body of the vehicle;
Figure 5 is a sectional view showing a spare wheel held against the body of a vehicle in a position parallel to the body, and

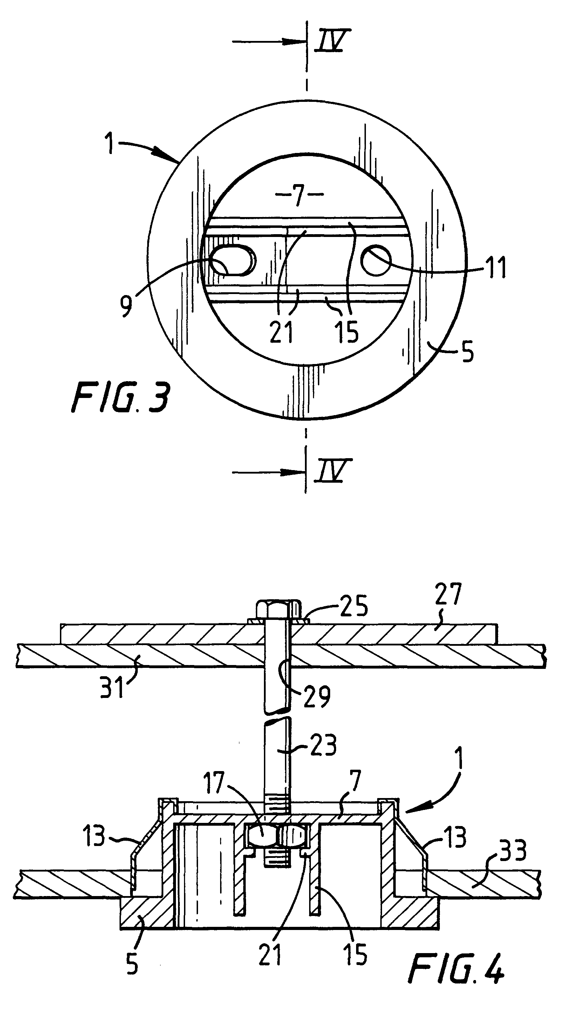

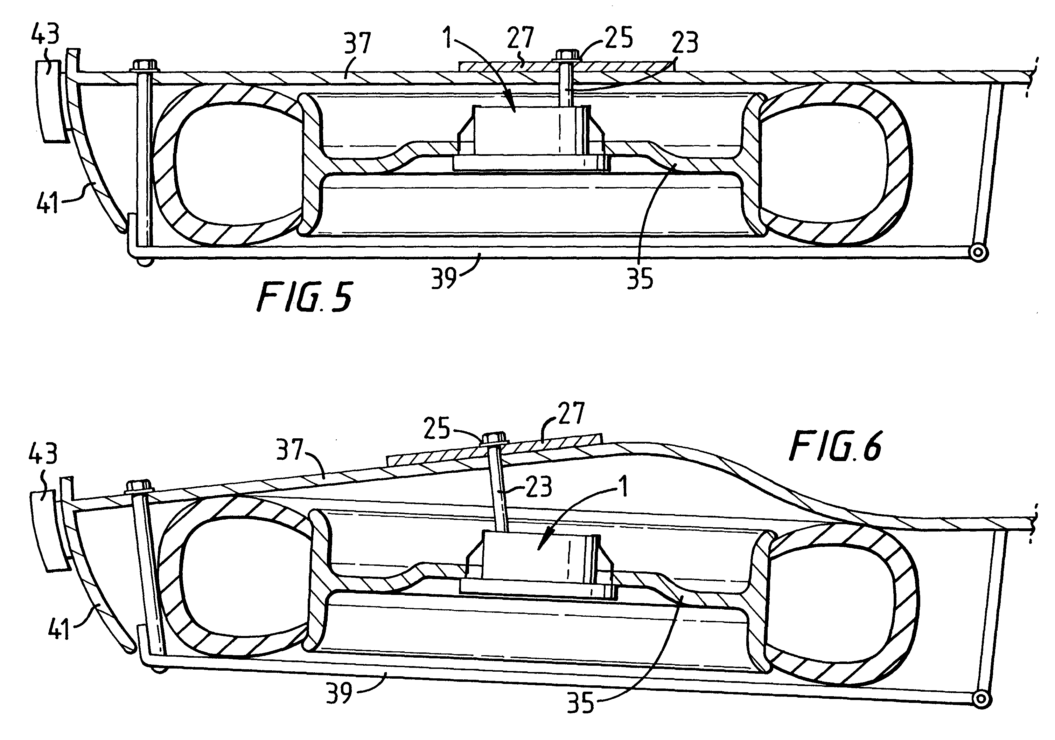

Figure 5 is a view similar to figure 4 but showing the spare wheel at an angle to the body.

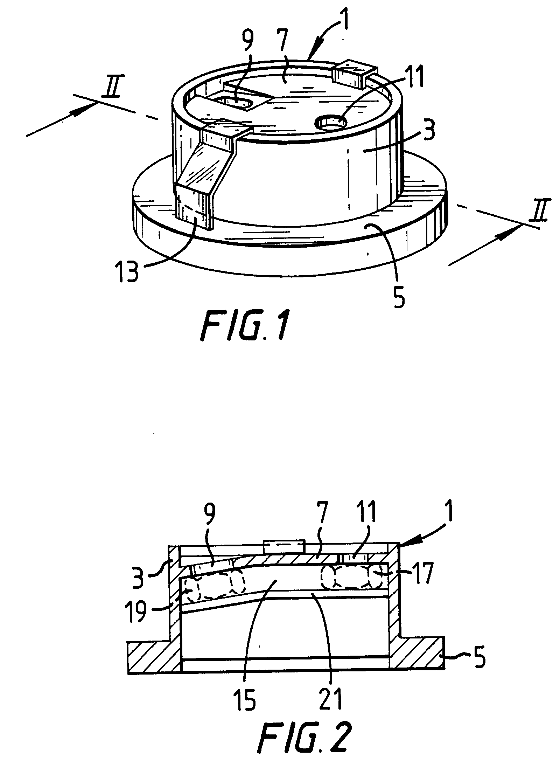

Referring firstly to figures 1 to 3, there is shown a main body portion 1 of a security device in accordance with the invention. It comprises a cylindrical part 3, mainly hollow, having an annular flange 5 at one end. The upper surface 7 of the main body portion 1 is slightly recessed and has two apertures 9 and 11 diametrally arrange in the upper surface. One of the apertures 9 is elongated for a purpose to be described hereafter. It will also be observed that this aperture 9 is inclined in relation to the surface 7.

Situated on opposite sides of the body portion 1 in positions at 90° to the line of the two apertures 9 and 11 are to spring clips 13, only one of which is seen in these figures.

Depending from the underside of the surface 7 are two cross members 15 which extend parallel to the line of the apertures 9 and 11 and are spaced apart by the width of a nut shown in two possible positions at 17 and 19. Beneath the position of the nut are two ribs 21, as can best be seen in figure 4, and these ribs 21 are adapted to retain the nut when it has been inserted between the two cross members 15 in either of the two positions 17 and 19 so that the nut is held captive beneath the associated aperture 11 and 9 respectively.

Turning now to figure 4, the remainder of the device can be seen comprising a bolt 23 with a washer 25 and a plate 27 through which the bolt 23 passes. As can also be seen, the bolt passes through an aperture 29 in the body of a vehicle indicated at 31. A central part of a spare wheel is shown at 33.

### Operation of the device will now be considered:-

For this purpose, reference will be made to figures 4 and 5. Figure 5 shows a spare wheel 35 with the device in use holding the spare wheel 35 in parallel with and against a portion of the body of a vehicle, in this case the boot floor 37. It is also located within the customary cage 39 so as to be located behind a depending body part 41 adjacent the rear bumper 43 of the vehicle.

To assemble the device with the spare wheel 35 out of the vehicle, the main body 1, a nut is inserted between the two cross members to lie in position beneath the aperture 11. The nut is forced past the ribs 21 so that it is held in place. The main body portion 1 is then inserted into the central aperture of the spare wheel 35 and pushed home so that the flange 5 rests against the central part 33 of the wheel 35. In this position the spring clips 13 engage the periphery of the central aperture of the wheel 35 so as to hold the main body portion 1 of the device in situ in the wheel 35.

The wheel 35 is the placed in the cage 39 and is offered up against body 37 in the usual operation of the cage 39. The plate 27 is then located over the previously made aperture 29 in the body and the bolt 23 is pushed through both the plate 27 and the body 37so as to pass down into the aperture 11 and then into engagement with the nut 17. The bolt 23 is then screwed up to secure the main body portion and thus the wheel.

To release the wheel for use, the bolt 23 is unscrewed to release the main body portion 1 and the cage 39 can be let down in the usual way to provide access to the wheel 35. Once the wheel has been removed from the lowered cage 39, the main body portion 1 can be pushed out of the wheel and the wheel is ready for use.

To use the security device with a wheel 35 which is located at an angle to the boot floor, the same procedure is adopted as before but using the aperture 9. This set up is shown in figure 5. The elongated nature of the aperture 9 allows the bolt 23 to engage the nut 19 with the body at an angle to the longitudinal axis of the main body portion 1. As can be see from figure 5, while the bolt 23 is at an angle to the main body portion 1, it f its snugly to the plate 27 and avoids any unsightly fixing within the boot.

As has been shown, in both fixing orientations, the apertures 9 and 11 are offset from the centre line of the main body portion 1. This provides an extra security feature in that it is impossible to dismantle the device by rotating the main body 1.

It will be appreciated that modifications and/or additions may be made to the above described embodiment without departing from the scope of the invention. For example, the nut used, instead of being a standard nut as shown, could be a lock nut, thus ensuring security of the spare wheel even if the bolt 23 is not done up very tightly and also prevent any vibration of the vehicle from loosening the nut. If desired, for suitable applications, the captive nut could be dispensed with by providing suitable threaded apertures in the main body portion.

The ribs 21 could be replaced by a plurality of protrusions or could be omitted entirely if the nut is a tight push fit between the cross members.

It will be appreciated that while the invention has been described as applying to positioning the spare wheel beneath the boot of a vehicle, it could also be applied where the spare wheel is attached to other parts of a vehicle. It is not only applicable to cars but also to vans, lorries or other vehicles where suitable.

From the above described embodiment of the invention, it will be appreciated that the invention is capable of providing significant spare wheel security with the use of a relatively simple device which can be inexpensive to produce.

## Claims

1. A security device for the spare wheel of a vehicle comprising a main body (1) having a main cylindrical part (3) adapted to pass through the central aperture of a wheel, an annular flange (5) at one end larger than the wheel aperture so that it cannot pass therethrough and threaded means (17) in the main body portion and bolt means (23) adapted to pass through an aperture in a suitable part of the vehicle but having a head (25) too large to pass therethrough, the bolt means (23) cooperating with the threaded means (17) in the main body (1) so as to retain the vehicle wheel against the said suitable part of the vehicle, **characterized in that** spring means (13) extend radially outwardly from the cylindrical part (3) for engaging the rim of the wheel aperture to retain the main body (1) in the wheel aperture.

2. A device as claimed in claim 1, wherein the threaded means in the main body comprises a captive nut (17).

3. A device as claimed in claim 2, wherein the cylindrical part (3) of the main body (1) is hollow and is provided with the cross members (15) between which the captive nut (17) is held.

4. A device as claimed in claim 3, wherein the cross members (15) are provided with ribs or other protrusions (21), the nut (17) being pushed past these ribs or protrusions (21) and being retained thereby.

5. A device as claimed in any one of claims 2 to 4, wherein the spring means (13) comprise spring clips, attached to the main body (1), parts of these clips extending longitudinally of the main body (1) and away therefrom.

6. A device as claimed in any one of claims 2 to 5, wherein the main body (1) is closed at one end away from the flange (5) and is provided with an aperture (9, 11)above the captive nut (17) through which the bolt (23) can pass.

7. A device as claimed in claim 6, wherein two apertures (9, 11) are provided, one inclined to the other so that the device can be used with spare wheels which are inclined to the surface to which they are to be attached as well as parallel thereto.

8. A device as claimed in claim 6 or 7, wherein provision is made for the captive nut (17) to be held at an angle beneath the inclined aperture.

9. A device as claimed in claim 6, 7 or 8, wherein the inclined aperture (9) is of elongated shape to enable the bolt to pass therethrough at an angle.

10. A device as claimed in any preceding claim, wherein a plate (27) is provided to lie inside the boot floor (31) of the vehicle so that the bolt head (25) acts on the plate (27)instead of directly on the boot floor (31).

## Patentansprüche

1. Sicherungsvorrichtung für das Ersatzrad eines Fahrzeuges, umfassend einen Hauptkörper (1) mit einem zylindrischen Hauptteil (3), der zum Hindurchgehen durch die zentrale Öffnung eines Rades geeignet ist, einen ringförmigen Flansch (5) an einem Ende, der größer als die Radöffnung ist, so dass er nicht hindurchgehen kann, und eine Gewindeeinrichtung (17) im Hauptkörperteil und eine Bolzeneinrichtung (23), die zum Hindurchgehen durch eine Öffnung in einem geeigneten Teil des Fahrzeuges geeignet ist, aber einen Kopf (25) aufweist, der zum Hindurchgehen zu groß ist, wobei die Bolzeneinrichtung (23) mit der Gewindeeinrichtung (17) im Hauptkörper (1) zusammenarbeitet, um das Fahrzeugrad gegen das geeignete Teil des Fahrzeuges festzuhalten, **dadurch gekennzeichnet, dass** sich eine Federeinrichtung (13) von dem zylindrischen Teil (3) radial nach außen zum Eingriff mit dem Rand der Radöffnung erstreckt, um den Hauptkörper (1) in der Radöffnung festzuhalten.

2. Vorrichtung nach Anspruch 1, worin die Gewindeeinrichtung im Hauptkörper eine unverlierbare Mutter (17) umfasst.

3. Vorrichtung nach Anspruch 2, worin der zylindrische Teil (3) des Hauptkörpers (1) hohl und mit Querteilen (15) versehen ist, zwischen denen die unverlierbare Mutter (17) gehalten ist.

4. Vorrichtung nach Anspruch 3, worin die Querteile (15) mit Rippen oder anderen Vorsprüngen (21) versehen sind, wobei die Mutter (17) an diesen Rippen oder Vorsprüngen (21) vorbeigedrückt und dadurch festgehalten ist.

5. Vorrichtung nach einem der Ansprüche 2 bis 4, worin die Federeinrichtung (13) Federklemmen umfasst, die an dem Hauptkörper (1) befestigt sind, wobei sich Teile der Klemmen längs des Hauptkörperas (1) und weg davon erstrecken.

6. Vorrichtung nach einem der Ansprüche 2 bis 5, worin der Hauptkörper (1) an einem Ende weg vom Flansch (5) verschlossen und mit einer Öffnung (9,11) oberhalb der unverlierbaren Mutter (17) versehen ist, durch die der Bolzen (23) hindurchgehen kann.

7. Vorrichtung nach Anspruch 6, worin zwei Öffnungen (9,11) vorgesehen sind, deren eine schräg zur anderen verläuft, so dass die Vorrichtung bei Ersatzrädern benutzt werden kann, die schräg sowie parallel zu der Oberfläche liegen, an der sie befestigt werden sollen.

8. Vorrichtung nach Anspruch 6 oder 7, worin eine Einrichtung vorgesehen ist, um die unverlierbare Mutter (17) in einem Winkel unter der schrägen Öffnung zu halten.

9. Vorrichtung nach Anspruch 6, 7 oder 8, worin die schräge Öffnung (9) eine längliche Gestalt hat, um das Hindurchgehen des Bolzens in einem Winkel zu gestatten.

10. Vorrichtung nach einem vorhergehenden Anspruch, worin eine Platte (27) innerhalb des Kofferraumbodens (31) des Fahrzeuges liegend vorgesehen ist, so dass der Bolzenkopf (25) auf die Platte (27) statt direkt auf den Kofferraumboden (31) wirkt.

## Revendications

1. Dispositif de sécurité pour la roue de secours d'un véhicule comprenant un corps principal (1) ayant une partie principale cylindrique (3) adaptée pour passer par l'ouverture centrale d'une roue, une bride annulaire (5) en une extrémité plus grande que l'ouverture de roue de telle sorte qu'elle ne peut pas y passer et un moyen fileté (17) dans le corps principal et un moyen formant boulon (23) adapté pour passer dans une ouverture réalisée dans une partie appropriée du véhicule mais ayant une tête (25) trop grande pour y passer, le moyen formant boulon (23) coopérant avec le moyen fileté (17) dans le corps principal (1) afin de retenir la roue de véhicule contre ladite partie appropriée du véhicule, **caractérisé en ce que** des moyens élastiques (13) s'étendent radialement à l'extérieur de la partie cylindrique (3) pour se mettre en prise avec le bord de l'ouverture de roue afin de retenir le corps principal (1) dans l'ouverture de roue.

2. Dispositif selon la revendication 1, dans lequel le moyen fileté dans le corps principal comprend un écrou captif (17).

3. Dispositif selon la revendication 2, dans lequel la partie cylindrique (3) du corps principal (1) est creuse et est munie d'éléments transversaux (15) entre lesquels est maintenu l'écrou captif (17).

4. Dispositif selon la revendication 3, dans lequel les éléments transversaux (15) sont munis de nervures ou autres protubérances (21), l'écrou (17) étant placé derrière ces nervures ou protubérances (21) pour être retenu par ces dernières.

5. Dispositif selon l'une quelconque des revendications 2 à 4, dans lequel les moyens élastiques (13) comprennent des pattes élastiques, attachées au corps principal (1), une partie de ces pattes s'étendant dans le sens longitudinal du corps principal (1) et en s'éloignant de celui-ci.

6. Dispositif selon l'une quelconque des revendications 2 à 5, dans lequel le corps principal (1) est fermé en une extrémité à l'opposé de la bride (5) et est muni d'une ouverture (9, 11) au-dessus de l'écrou captif (17) à travers laquelle le boulon (23) peut passer.

7. Dispositif selon la revendication 6, dans lequel deux ouvertures (9, 11) sont prévues, l'une étant inclinée par rapport à l'autre de façon que le dispositif puisse être utilisé avec des roues de secours qui sont inclinées par rapport à la surface à laquelle elles doivent être attachées ainsi que parallèles à celle-ci.

8. Dispositif selon la revendication 6 ou 7, dans lequel il est prévu que l'écrou captif (17) puisse être maintenu en formant un certain angle sous l'ouverture inclinée.

9. Dispositif selon la revendication 6, 7 ou 8, dans lequel l'ouverture inclinée (9) est de forme allongée pour permettre au boulon d'y passer en formant un certain angle.

10. Dispositif selon l'une quelconque des revendications précédentes, dans lequel une plaquette (27) est prévue pour reposer à l'intérieur du plancher (31) du coffre du véhicule de façon que la tête (25) du boulon agisse sur la plaquette (27) au lieu d'agir directement sur le plancher (31) du coffre.
